# EUROPÄISCHE PATENTSCHRIFT

(11) **EP 1 424 816 B1**
(45) Veröffentlichungstag und Bekanntmachung des Hinweises auf die Patenterteilung: **06.03.2013**
(21) Anmeldenummer: 03024474.3
(22) Anmeldetag: 23.10.2003
(51) Int. Cl.: H04W 8/26, H04W 84/18, H04W 80/00, H04W 88/12, H04L 29/08

(54) **Verfahren zum Austausch von Daten zwischen Bluetooth-Geräten**
Method for data exchange between Bluetooth devices
Procédé pour l'échange de données entre équipements Bluetooth

(30) Priorität: 27.11.2002 DE 10255341
(43) Veröffentlichungstag der Anmeldung: 02.06.2004
(73) Patentinhaber: Tenovis GmbH & Co. KG, 60326 Frankfurt am Main (DE)
(72) Erfinder: Rommel, Joachim, 64546 Mörfelden-Walldorf (DE); Kammoun, Khalil, 60325 Frankfurt am Main (DE); Ness, Reto, 65817 Eppstein (DE)
(74) Vertreter: Tergau & Walkenhorst

(56) Entgegenhaltungen:
- WO-A-01/97465

## Beschreibung

Die Erfindung betrifft ein Verfahren zum Austausch von Daten in einem drahtlosen Kommunikationssystem zwischen mehreren Applikationsprogrammen auf einem Bluetooth- Server und mehreren mobilen Endgeräten über mehrere Basisstationen, die jeweils mit dem Bluetooth- Server verbunden sind, gemäß dem Oberbegriff von Anspruch 1.

Funknetzinfrastrukturen, die auf der Bluetooth- Technologie basieren, bestehen im Allgemeinen aus Basisstationen, sogenannten Bluetooth- Access- Points (BAP), sowie eventuell aus einem Server, der die Zugriffe mobiler Endgeräte auf die Systemressourcen zentral kontrolliert und koordiniert, wobei die Basisstationen und der Server meist über ein lokales IP- Netz (LAN) verbunden sind.

In der Regel implementiert jede Basisstation sämtliche Schichten des Bluetooth-Protokollstapels und arbeitet somit als eigenständiger LAN- Zugriffspunkt in einem dezentralen System. Somit kontrolliert jede Basisstation unabhängig von den anderen die eigenen physikalischen und logischen Verbindungen, wobei die Verbindungskontrolle der physikalischen Verbindungen in den unteren Schichten des Bluetooth- Protokollstapels (Lower Layer Stack) und die der logischen in den oberen Schichten (Upper Layer Stack) erfolgt.

Eine andere Möglichkeit ist die Aufteilung der Protokollschichten auf Basisstation und einen zentralen Server. Dabei laufen in den Basisstationen nur noch die unteren Bluetooth- Protokollschichten. In einem zentralen Server (Bluetooth-Server) laufen die oberen Protokollschichten der einzelnen Basisstationen. Ein entscheidender Vorteil dabei ist, dass die Basisstationen relativ kostengünstig herzustellen sind, da neben der erforderlichen Bluetooth- Hardware nur noch eine Schnittstelle zum zentralen Server nötig ist. Ein solches drahtloses Kommunikations- (Bluetooth-) System wird in US 2002/080754 und WO 01/97465 A beschrieben.

Der Nachteil bei dem genannten Stand der Technik ist jedoch, dass die Instanzen der oberen Protokoll-Schichten mehrfach vorgesehen werden müssen und daher hohe Anforderungen an Speicher- und Rechenleistung des zentralen Servers gestellt werden müssen. Des weiteren ist der Wechsel eines mobilen Endgerätes in den Funkbereich einer anderen Basisstation recht aufwendig, da die zum mobilen Endgerät zugehörigen Daten und logischen Verknüpfungen von der zugehörigen Instanz des oberen Protokollstapels der alten Basisstation auf die zugehörige Instanz der neuen Basisstation übergehen müssen.

Aufgabe der Erfindung ist es, eine flexible Bluetooth- Protokoll- Architektur zu schaffen, bei der eine Vielzahl von Basisstationen mit einer Zentralstation verbunden werden können.

Diese Aufgabe wird gelöst durch das Verfahren nach Anspruch 1. Bevorzugte Ausführungsformen der Erfindung sind Gegenstand der Unteransprüche.

Die erfindungsgemäße Lösung beruht darauf, auf den Basisstationen (BAP) nur die unteren Protokollschichten des Bluetooth- Standards zu implementieren und auf der Zentralstation (BOS) nur eine einzige Instanz der oberen Protokollschichten einzurichten. Damit wird erreicht, dass man die physikalische und logische Verbindungskontrolle trennen kann, d.h. durch eine spezielle System- und Protokollarchitektur die physikalischen Verbindungen von den logischen Verbindungen unabhängig auf- und abbauen kann: erstere werden von den Basisstationen BAP kontrolliert, letztere werden quasi zentral von der Zentralstation (Bluetooth Operating Server, BOS) kontrolliert. Damit ergibt sich eine Systemarchitektur, mit der durch eine Zentralstation mehrere Bluetooth-Basisstationen adressierbar sind. Hierbei gibt es für die Kontrolle der physikalischen Verbindungen jeweils eine Instanz pro Basisstation. Sämtliche logischen Verbindungen werden jedoch von einer gemeinsamen Instanz auf dem Bluetooth-Server kontrolliert.

Das erfindungsgemäße Verfahren zum Austausch von Daten in einem drahtlosen Kommunikationssystem zwischen mehreren Applikationsprogrammen auf einem Bluetooth- Server und mehreren mobilen Endgeräten über mehrere Basisstationen, die jeweils mit dem Bluetooth- Server verbunden sind, wobei eine Transportschicht mit einer oberen Transportschicht in dem Bluetooth- Server und jeweils einer unteren Transportschicht in jeder der mehreren Basisstationen zum Verwalten der Verbindung zwischen einem der mehreren Applikationsprogramme und einer der mehreren Basisstationen angeordnet ist, ist dadurch gekennzeichnet, dass jedes der mehreren Applikationsprogramme auf eine gemeinsame obere Transportschicht zugreift und eine Host-Controller-Management-Einheit unter der oberen Transportschicht in dem Bluetooth- Server angeordnet ist, die mehrere Host-Controller-Subinstanzen aufweist, die jeweils einer unteren Transportschicht auf den mehreren Basisstationen zugeordnet ist, so dass jedes der mehreren Applikationsprogramme mit mehreren Basisstationen verbunden sein kann.

Weiterhin erhält jede der mehreren Basisstationen eine physikalische Adresse und ist jedem der mehreren mobilen Endgeräte von jedem der mehreren Applikationsprogramme eine logische Adresse zugeordnet, so dass die physikalische Adresse jeder der mehreren Basisstationen mit der logischen Adresse jedes der mehreren mobilen Endgeräte in einer Logikverbindungsschicht verknüpft wird, die über der oberen Transportschicht in dem Bluetooth- Server angeordnet ist.

Dabei wird vorzugsweise die logische Adresse des einen der mehreren mobilen Endgeräte beibehalten, wenn eine physikalische Verbindung zwischen einer der mehreren Basisstationen und einem der mehreren Endgeräte abgebaut wird und eine physikalische Verbindung zwischen einer anderen der mehreren Basisstationen und dem einen der mehreren Endgeräte aufgebaut wird.

Bei einer weiteren bevorzugten Ausführungsform der Erfindung erfolgt der Austausch von Daten zwischen der oberen Transportschicht und der unteren Transportschicht über ein lokales Datennetz, insbesondere eine Ethernet- oder eine ISDN- S₀- oder ISDN- UPₙ- Verbindung.

Dabei erfolgt der Austausch von Daten zwischen der oberen Transportschicht und der unteren Transportschicht über ein lokales Datennetz vorzugsweise verschlüsselt.

Bei einer weiteren bevorzugten Ausführungsform der Erfindung wird zwischen Sprachdaten und sonstigen Daten unterschieden, wobei der Austausch von Sprachdaten zwischen der oberen Transportschicht und der unteren Transportschicht über einen UDP/IP- Socket erfolgt und der Austausch von sonstigen Daten zwischen der oberen Transportschicht und der unteren Transportschicht über einen TCP/IP- Socket erfolgt. Dies hat den Vorteil, dass bei Sprachdaten eine Übertragung besser in Echtzeit durchführbar ist, was bei den sonstigen Daten nicht unbedingt erforderlich ist.

Um ferner die Verbindungen permanent aufrechtzuerhalten, wird vorzugsweise zwischen der oberen Transportschicht und der unteren Transportschicht in regelmäßigen Zeitabständen ein Wecksignal ausgetauscht.

Es ist ein Vorteil der Erfindung, dass mit ihr die Netzinfrastruktur einfach und damit kostengünstig aufgebaut werden kann. Im Gegensatz zu üblichen Bluetooth-Basisstationen sind bei der vorgeschlagenen Architektur nur die unteren Schichten des Bluetooth- Protokollstapels implementiert. Diese laufen in der Regel als Firmware auf dem Bluetooth- Basisbandchip. Die Basisstation besteht somit nur aus einem Bluotooth- Modul sowie einer Schnittstelle, über die das Modul mit der Bluetooth- Zentralstation verbunden werden kann (z.B. Ethernet, USB oder sonstiges). Somit ermöglicht die Erfindung sehr einfache, kleine und kostengünstige Lösungen für die Bluetooth- Basisstationen. Darüber hinaus lässt sich das System einfach verwalten: Da es sich um ein zentrales System handelt, bei dem sämtliche logischen Verbindungen von der Bluetooth- Zentralstation kontrolliert werden, ist bei dem System nur an dieser einen Stelle eine Administration notwendig, eine Administration jeder einzelnen Station mit doppelter Datenhaltung ist nicht erforderlich.

Ferner erlaubt es die Architektur, auf eine einfache Weise zusätzliche Bluetooth-Radios in eine Basisstation einzubauen und sie so zu einer sog. Multi-Radio-Basisstation zu erweitern, ohne dass mehrere Instanzen der oberen Schichten des Bluetooth- Protokollstapels benötigt werden. Das bedeutet, dass sich die Kapazität mit sehr geringem Aufwand erweitern lässt.

Außerdem ist ein schnelles Handover für mobile Endgeräte gewährleistet: Ein Handover, bei dem die Verbindung zwischen einem mobilen Endgerät und einer ersten Basisstation abgebaut und zu einer anderen Basisstation neu aufgebaut wird, kann unter Verwendung der erfindungsgemäßen Architektur erheblich beschleunigt werden, da nur die physikalische Verbindung ab- und erneut aufgebaut werden muss. Sämtliche logischen Verbindungen, die über diese physikalische Verbindung laufen, bleiben in der Zentralstation (Bluetooth- Server) erhalten und sind nur für die Zeit des Umhebens der physikalischen Verbindung unterbrochen.

Weitere Merkmale und Vorteile der Erfindung ergeben sich aus der folgenden Beschreibung bevorzugter Ausführungsbeispiele, bei der Bezug genommen wird auf die beigefügten Zeichnungen.

Fig. 1 zeigt ein Bluetooth- System mit einem zentralen Bluetooth- Server nach dem Stand der Technik.

Fig. 2 zeigt die Struktur von Software und Hardware in einer Basisstation nach dem Stand der Technik.

Fig. 3 zeigt die Struktur von Software und Hardware bei Aufteilung der Transportschicht auf eine Basisstation und einen Bluetooth- Server nach dem Stand der Technik.

Fig. 4 zeigt die Struktur von Software und Hardware bei Aufteilung der Transportschicht auf eine Basisstation und einen Bluetooth- Server gemäß der Erfindung.

Fig. 5 zeigt die Struktur von Software und Hardware bei Aufteilung der Transportschicht auf eine Basisstation, eine Multi-Radio- Basisstation und einen Bluetooth- Server gemäß der Erfindung.

Fig. 6 zeigt die erfindungsgemäße Struktur der L2CAP- Schicht.

Fig. 7, 8, 9 dienen zur Erläuterung einer Handover- Prozedur in der L2CAP- Schicht gemäß der Erfindung.

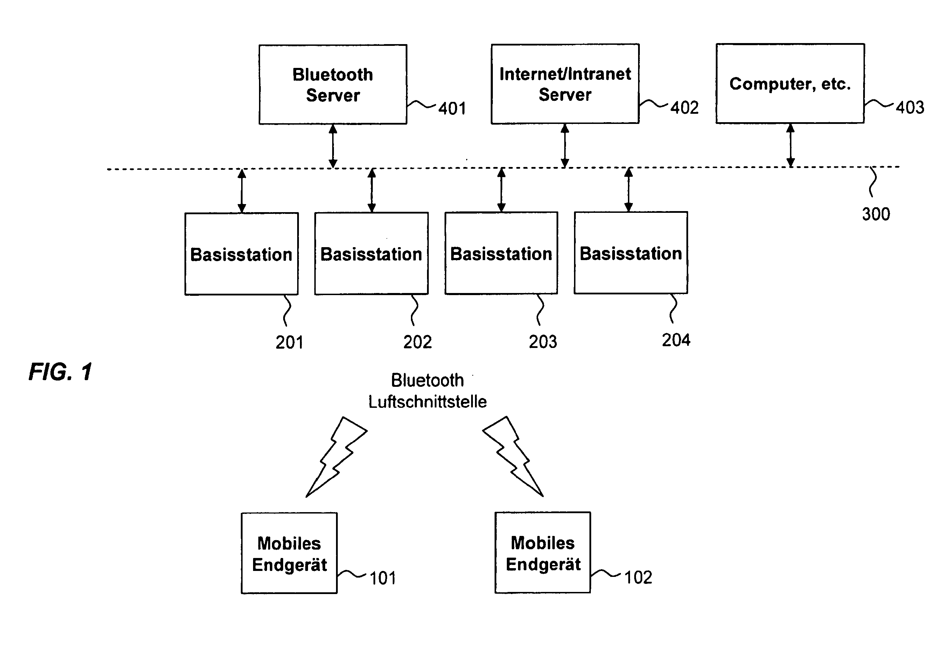

In Fig. 1 ist die Architektur eines Bluetooth- Systems dargestellt. Zwischen einem mobilen Endgerät 101, 102 (beispielsweise einem tragbaren Rechner) und einer von mehreren Basisstationen 201, 202, 203, 204 soll eine Kommunikationsverbindung hergestellt werden. Auf jeder der Basisstationen 201, 202, 203, 204 können beliebige Applikationsprogramme laufen, oder die Basisstationen 201, 202, 203, 204 können wie dargestellt über ein Transportmedium 300 mit übergeordneten Servern 401, 402, 403 verbunden sein.

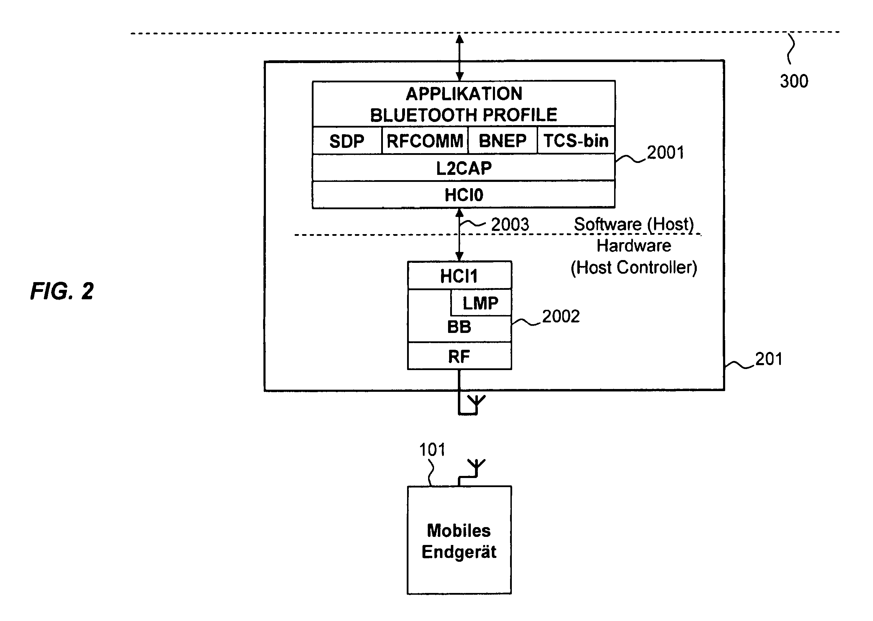

Die Kommunikation der Applikationsprogramme auf der Basisstation 201 mit den mobilen Endgeräten 101, 102 wird über einen Bluetooth- Protokollstapel abgewickelt, der in Fig. 2 gezeigt ist. Der Bluetooth- Protokollstapel teilt sich in einen oberen und einen unteren Protokollstapel. Der obere Protokollstapel 2001 umfasst eine erste Schicht, die beispielsweise ein Protokoll zur Bereitstellung und Erkennung von Diensten (Service Discovery Protocol, SDP), eine Emulation einer seriellen Schnittstelle über Bluetooth (RFCOMM), ein Protokoll zur Übertragung von Ethernet-Paketen über Bluetooth (Bluetooth Network Encapsulation Protocol, BNEP) und ein Protokoll zur Signalisierung von Telefongesprächen (Telephony Control and Signalling, TCS) enthält. Unterhalb dieser ersten Protokollschicht befindet sich als zweite Protokollschicht eine Schicht zur Verwaltung der logischen Kanäle und für das Protokoll- Multiplexing (Logical Link Control and Adaptation Protokoll, L2CAP). Darunter schließt sich eine erste Host-Controller-Interface-Schicht oder obere Transportschicht HCl0 an.

Dieser obere Protokollstapel 2001 ist als Software in der Basisstation 201 implementiert, ebenso wie die darüber liegenden Applikationsprogramme, die hier nicht weiter erläutert werden.

Über eine Schnittstelle 2003 besteht eine Verbindung von dem oberen Protokollstapel 2001 zu dem unteren Protokollstapel 2002, der i.a. als Firmware in der Basisstation 101 implementiert ist. In diesem unteren Protokollstapel 2002 befindet sich eine zweite Host-Controller-Interface-Schicht oder untere Transportschicht HCl1 und außerdem u.a. ein Protokoll zur Verwaltung der physikalischen Kanäle (Link Manager Protocol, LMP), eine sog. Link-Kontrolle (Baseband, BB) sowie ein Funkverbindungsteil (RF).

Die Kommunikation zwischen dem oberen und dem unteren Protokollstapel erfolgt also über die obere Transportschicht HCl0 sowie die untere Transportschicht HCl1.

Die Applikationsprogramme können über das Transportmedium 300 mit anderen Applikationsprogrammen kommunizieren. Außerdem kann eine Verbindung eines Applikationsprogramms auf einer der Basisstationen 201, 202, ... mit bis zu sieben mobilen Endgeräten 101, 102, ... hergestellt werden. Die Basisstationen 101, 102, ... können verschiedene Bluetooth- Dienste (Applikationsprogramme) anbieten, wobei ein solcher Dienst den Zugriff auf einen Internet/Intranet- Server 402 oder auf andere Computer 403 beinhalten kann, die über das Transportmedium 300 (z.B. ein Local Area Network, LAN) mit den Basisstationen 101 verbunden sind. Ferner sind die Basisstationen 101 über das Transportmedium 300 mit einem zentralen Bluetooth- Server (Bluetooth Operating Server, BOS) 401 verbunden. Der zentrale Server 401 kann seinerseits ebenfalls verschiedene Bluetooth- Dienste anbieten.

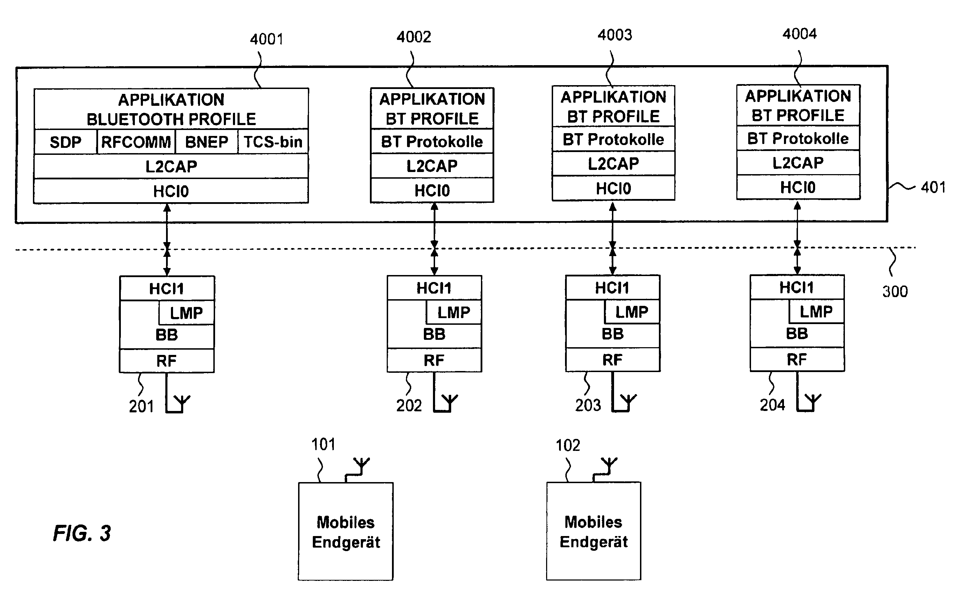

Fig. 3 zeigt die Bluetooth- Protokollschichten, wenn sie auf den zentralen Server 401 und Basisstationen, beispielsweise die Stationen 201 bis 204, aufgeteilt werden. Die oberen Protokollschichten sind bei dieser Aufteilung als Software im zentralen Server 401 implementiert. Zu jeder angeschlossenen Basisstation läuft eine Instanz 4001, 4002, 4003, 4004 als obere Protokollschicht im zentralen Server 401. Die oberen Protokollschicht- Instanzen 4001 bis 4004 kommunizieren mit den Basisstationen 201 bis 204 über das Transportmedium 300, über das die HCl-Schnittstelle realisiert ist. Jeder Basisstation 201 bis 204 ist genau eine Instanz der oberen Protokollschichten zugeordnet, so ist der Basisstation 201 die Instanz 4001 der oberen Protokollschichten zugeordnet, der Basisstation 202 ist die Instanz 4002 der oberen Protokollschichten zugeordnet, usw.

Mit anderen Worten, auch in einem drahtlosen Kommunikationssystem, bei dem die Protokollschichten auf den Bluetooth- Server 401 und die Basisstationen 201, 202, ... aufgeteilt ist, darf bei dem Austausch von Daten nur jeweils eine eindeutige Verbindung zwischen der Applikation und einer Basisstation bestehen.

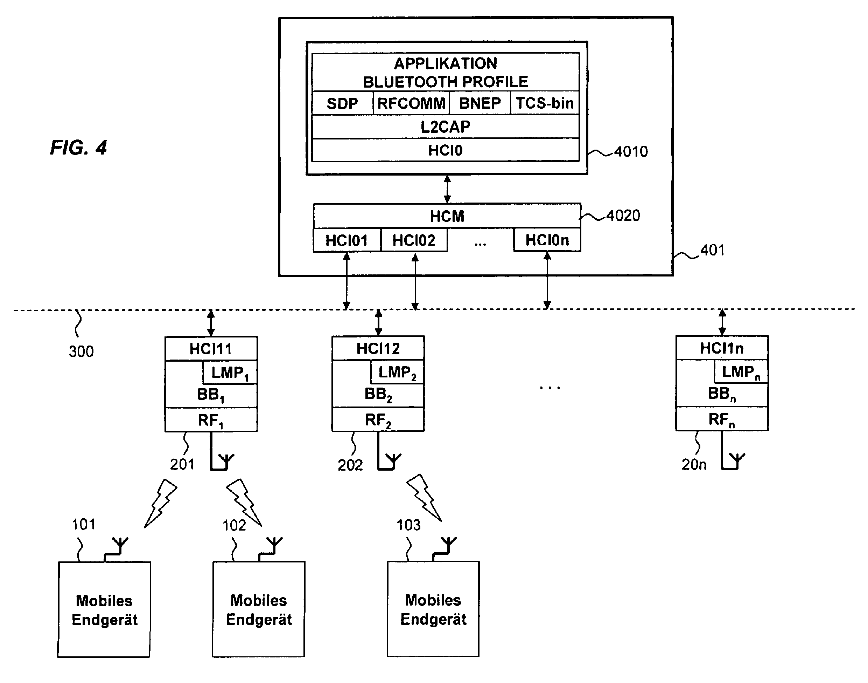

Um diese Einschränkung zu überwinden, wird die Aufteilung der Protokollstapel nach Fig. 3 erfindungsgemäß derart modifiziert, wie es in Fig. 4 gezeigt ist und im folgenden beschrieben wird.

Fig. 4 zeigt die erfindungsgemäße Aufteilung der Bluetooth- Protokollschichten auf den Bluetooth- Server und die Basisstationen 201, 202, ... 20n. Auf dem Bluetooth-Server 401 laufen beliebige Applikationsprogramme. Die Kommunikation zwischen Applikationsprogrammen eines der mobilen Endgeräte 101, 102, 103 und den Applikationsprogrammen der Zentralstation 401 laufen über einen Bluetooth-Protokollstapel. Der obere, in Zusammenhang mit Fig. 2 erläuterte Bluetooth-Protokollstapel teilt sich auf in einen oberen Stapelabschnitt 4010 und einen unteren Stapelabschnitt 4020. Der obere Stapelabschnitt 4010 enthält die Applikationen und Bluetooth- Profile. Daran schließt sich das Protokoll zur Bereitstellung und Erkennung von Diensten (Service Discovery Protocol, SDP), die Emulation der seriellen Schnittstelle über Bluetooth (RFCOMM), das Protokoll zur Übertragung von Ethernet- Paketen über Bluetooth (Bluetooth Network Encapsulation Protocol, BNEP) und das Protokoll zur Signalisierung von Telefongesprächen (Telephony Control and Signalling, TCS) an. Daran schließt sich als nächste Protokollschicht die Schicht zur Verwaltung der logischen Kanäle und das Protokoll- Multiplexing (Logical Link Control and Adaptation Protokoll, L2CAP) und schließlich die Host-Controller- Interface- Schicht (HCl0) an.

Erfindungsgemäß wird in dem unteren Stapelabschnitt 4020 eine zentrale Host Controller Management Einheit (HCM) eingefügt, die einzelne, unter ihr angeordnete Host- Controller- Instanzen HCl01, HCl02, ... HCl0n steuert. Diese Subinstanzen HCl01, HCl02, ... HCl0n bewerkstelligen den Datenaustausch und die Verteilung der Daten mit den einzelnen Basisstationen 201, 202, ... 20n.

Alle genannten Protokollschichten sind als Software in dem Bluetooth- Server 401 implementiert. Zu jeder angeschlossenen Basisstation 201, 202, ... 20n läuft eine Subinstanz des Host- Controllers HCl01, HCl02, ... HCl0n, jedoch nur eine einzige obere Transportschicht HCl0 als Teil des oberen Stapelabschnitts 4010. Der Bluetooth- Server 401 kommuniziert mit den Basisstationen 201, 202, ... 20n über das Transportmedium 300, über das die HCl- Schnittstelle realisiert ist. In den Basisstationen 201, 202, ... 20n ist der untere Protokollstapel mit der Protokollschicht zur Verwaltung der physikalischen Kanäle (Link Manager Protocol, LMP), der Link-Kontrolle (Baseband, BB) sowie dem Bluetooth- Funkverbindungsteil (RF) implementiert, vorzugsweise wiederum als Firmware.

Jeder Basisstation 201, 202, ... 20n ist genau eine Host- Controller- Instanz zugeordnet, so ist der Basisstation 201 die Host- Controller- Instanz HCl01 zugeordnet, der Basisstation 202 ist die Host- Controller- Instanz HCl02 zugeordnet, usw.

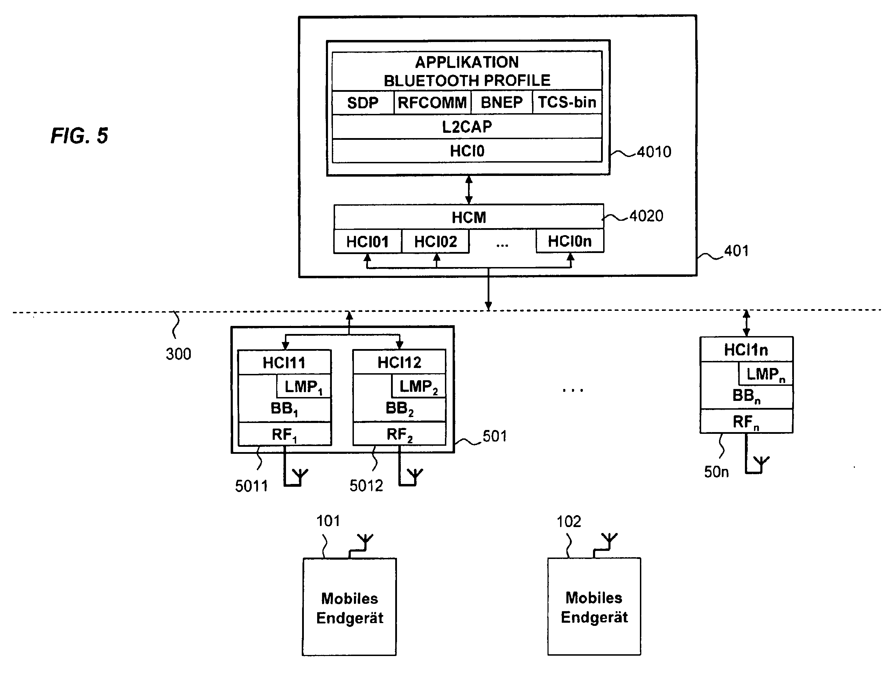

Neben einfachen Bluetooth- Radiostationen können auch sog. Multi- Radio-Basisstationen in einem Bluetooth- Netz eingesetzt werden. Eine derartige Multi-Radiostation ist in Fig. 5 dargestellt und mit 501 bezeichnet. Sie besteht aus zwei oder mehr Bluetooth- Radiomodulen, von denen zwei, nämlich 5011 und 5012 in Fig. 5 gezeigt sind. Im Unterschied zu der Multi-Radiostation 501 werden die weiteren Basisstationen in Fig. 5 als konventionelle, einfache Basisstationen bezeichnet, von denen eine mit 50n bezeichnete dargestellt ist. Die beiden Bluetooth- Radiomodule der Multi-Radio-Basisstation 501, nämlich 5011 und 5012, kommunizieren mit dem oberen Protokollstapel 401 über das Transportmedium 300, wobei sie jeweils ihre eigene untere Transportschicht HCl11 bzw. HCl12 für die Verbindung mit dem Transportmedium 300 haben.

Erfindungsgemäß ist es mit der Aufteilung des Bluetooth- Protokolls nach Fig. 5 möglich, mehrere Instanzen der unteren Schichten in den Basisstationen 501, ... 50n über die HCl- Schichten mit einer Instanz in dem oberen Protokollstapel 4010 kommunizieren zu lassen. Da die L2CAP- Schicht in dem oberen Protokollstapel 4010 die Umsetzung der logischen Datenkanäle auf die physikalischen Kanäle kontrolliert, muss diese vom Vorhandensein mehrerer Instanzen der unteren Protokollschichten wissen. Die physikalischen Datenkanäle (Asynchronous Connectionless Link, ACL) werden innerhalb der L2CAP- Schicht von Verbindungskontrollblöcken (Link Control Blocks, LCB) verwaltet. Somit ist jeder Verbindungskontrollblock durch eine eindeutige Kombination aus physikalischem Kanal und logischer Verbindung von den anderen zu unterscheiden. Theoretisch kann es dabei eine beliebige Anzahl an Verbindungskontrollblöcken und somit an physikalischen Verbindungen geben. Voraussetzung ist jedoch, dass die maximale Anzahl, die durch die Bluetooth- Spezifikation vorgegeben ist, nicht überschritten wird.

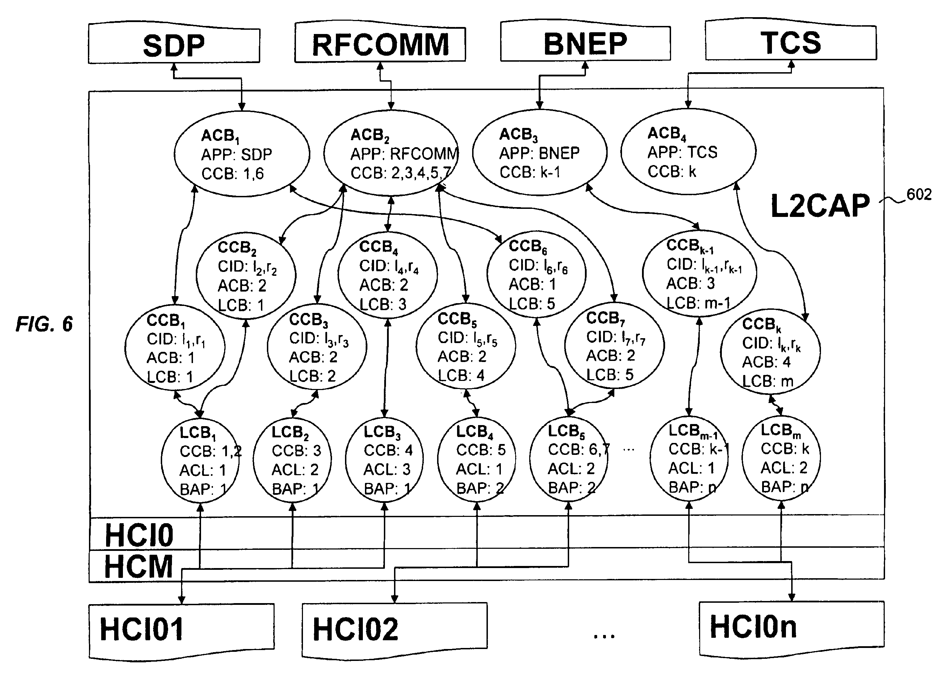

Der Verbindungsaufbau und Kommunikationsweg durch die L2CAP- Schicht und die Zuordnung der ACL- Daten zu einer Host- Controller- Instanz HCl01, HCl02, ..., HCl0n wird im folgenden anhand von Fig. 4 und Fig. 6 erläutert.

Jedem Bluetooth- Protokoll SDP, RFCOMM, BNEP und TCS ist ein Applikationskontrollblock (Application Control Block) ACB₁, ACB₂, ACB₃, ACB₄ zugeordnet. Diese Applikationskontrollblöcke ACB₁, ACB₂, ACB₃, ACB₄ werden beim Start der Applikationssoftware durch die L2CAP- Schicht angelegt. Weitere Kontrollblöcke sind nach dem Start der Software noch nicht vorhanden, sie werden erst bei einem Verbindungsaufbau eingerichtet. Der Verbindungsaufbau und das Einrichten von weiteren Kontrollblöcken wird im folgenden beschrieben.

Möchte beispielsweise ein mobiles Endgerät 101 auf der Zentralstation 401 eine Dienste- Abfrage über das Dienstprotokoll (Service Discovery Protocol) SDP durchführen, so baut dieses Endgerät als erstes eine physikalische ACL-Verbindung zu einer geeigneten Basisstation auf, z.B. zur Basisstation 201. Der Aufbau dieser physikalischen ACL- Verbindung wird über das Verbindungsprotokoll (Link Manager Protocol) LMP gesteuert. Dabei wird eine eindeutige Kennung (ACL 1) zur Kennzeichnung der physikalischen Verbindung von der LMP- Schicht der Basisstation 201 vergeben. Diese ACL- Kennung wird den oberen Protokollschichten durch die Mitteilung der HCl- Schicht "HCl Connection Complete" bekanntgegeben. Diese HCl- Mitteilung wird durch die der Basisstation 201 zugeordnete Host- Controller- Instanz HCl01 übermittelt. Die HCl- Schicht informiert die L2CAP- Schicht über den physikalischen Verbindungsaufbau, woraufhin die L2CAP- Schicht einen zugehörigen Verbindungskontrollblock (Link Control Block) LCB₁ anlegt oder allokiert, der die ACL- Kennung 1 und eine Basisstationskennung BAP 101 beinhaltet. Die erfindungsgemäße Basisstationskennung BAP 101 besagt, dass der Verbindungskontrollblock LCB₁ mit der Basisstation BAP 201 über die Host Controller Instanz HCl01 verknüpft ist.

Das mobile Endgerät möchte nun die Service- Abfrage starten und muss daher zuvor einen logischen L2CAP- Kanal aufbauen. Dazu sendet es die L2CAP-Protokollnachricht "L2CAP_ConnectReq", die u.a. eine Information "PSM" und "Source CID" enthält. Der Protokollmultiplexer (Protocol Service Multiplexer) PSM kennzeichnet das erforderliche Bluetooth- Protokoll, in diesem Fall SDP durch die Bedingung PSM = 0x0001, wie es in der Bluetooth- Spezifikation 1.1, Teil D, Kapitel 5.2 erläutert wird. Die Quellenidentifizierung (Source Channel Identifier, Source CID) ist die logische Kanalkennung des mobilen Endgeräts 101, d.h. der Gegenstelle. Diese Kennung wird in der L2CAP- Schicht der Zentralstation als Gegenstellen- CID (remote CID) r₁ bezeichnet. Die L2CAP-Schicht 602 beantwortet die Nachricht mit der Protokoll-Nachricht "L2CA_ConnectRsp", in der der Gegenstelle 101 die lokale CID (local CID) mitgeteilt wird, die vergebene logische Kanalkennung der Zentralstation. Die Anzahl der logischen Kanalkennungen CID ist durch den Bereich der nach Bluetooth- Spezifikation zuweisbaren Werte (0000h - FFFFh) beschränkt. Die L2CAP- Schicht legt nun einen Kanalkontrollblock (channel control block) CCB₁ an, der den Verbindungskontrollblock LCB₁ mit dem Applikationskontrollblock von SDP ACB₁ verknüpft. In diesem Kanalkontrollblock CCB₁ werden die Informationen "remote CID" r₁ und "local CID" I₁ sowie je eine Verknüpfung zu LCB₁ und ACB₁ gespeichert. In ACB₁ und LCB₁ wird jeweils umgekehrt die Verknüpfung zu dem Kanalkontrollblock CCB₁ gespeichert.

Somit können nun alle eingehenden Daten mit der logischen Kanalkennung (CID) r₁ eindeutig dem Dienstprotokoll SDP zugeordnet werden. Umgekehrt finden alle Daten, die vom Dienstprotokoll SDP zum mobilen Endgerät gesendet werden sollen, über die logische Kanalkennung CID I₁ den richtigen Weg über die Basisstation 201 zum mobilen Endgerät 101.

Möchte das mobile Endgerät 101 nun auch den Dienst der seriellen Schnittstellenemulation RFCOMM in Anspruch nehmen, so baut es einen weiteren logischen L2CAP- Kanal auf. Dieser logische Kanal läuft über ein und dieselbe physikalische Verbindung und somit über den Verbindungskontrollblock LCB₁. Beim Aufbau des logischen L2CAP- Kanals wird der Kanalkontrollblock CCB₂ angelegt, der den Verbindungskontrollblock LCB₁ mit dem gewünschten Applikationskontrollblock ACB₂ verbindet.

Ein zweites mobiles Endgerät 102 kann nun zeitgleich über die gleiche Basisstation 201 ebenfalls mit dem Server 401 kommunizieren. Beim physikalischen Verbindungsaufbau wird ein zweiter Verbindungskontrollblock LCB₂ erzeugt, der über die Host- Controller- Instanz HCl01 der Basisstation BAP 201 zugeordnet ist. Das mobile Endgerät kann nun den Dienst RFCOMM in Anspruch nehmen. Dazu wird wiederum ein logischer Kanal, gekennzeichnet durch den Kanalkontrollblock CCB₃, aufgebaut.

Ein drittes mobiles Endgerät 103 möchte beispielsweise über eine andere Basisstation 202 mit dem Bluetooth- Server 401 kommunizieren. Beim physikalischen Verbindungsaufbau wird nun ein Verbindungskontrollblock LCB₄ erzeugt, der über die Host Controller Instanz HCl02 der Basisstation BAP 202 zugeordnet ist. Das mobile Endgerät 103 kann nun ebenfalls den Dienst RFCOMM in Anspruch nehmen. Dazu wird ein logischer Kanal aufgebaut, der durch den Kanalkontrollblock CCB₅ gekennzeichnet ist.

Mit diesem erfindungsgemäßen Aufbau ist ein schnelles Handover zwischen zwei Basisstationen durchführbar, indem nur die physikalische Verbindung zur ersten Basisstation abgebaut und zu einer zweiten erneut aufgebaut wird. Logische Kanäle zwischen Zentralstation und mobilem Endgerät bleiben erhalten.

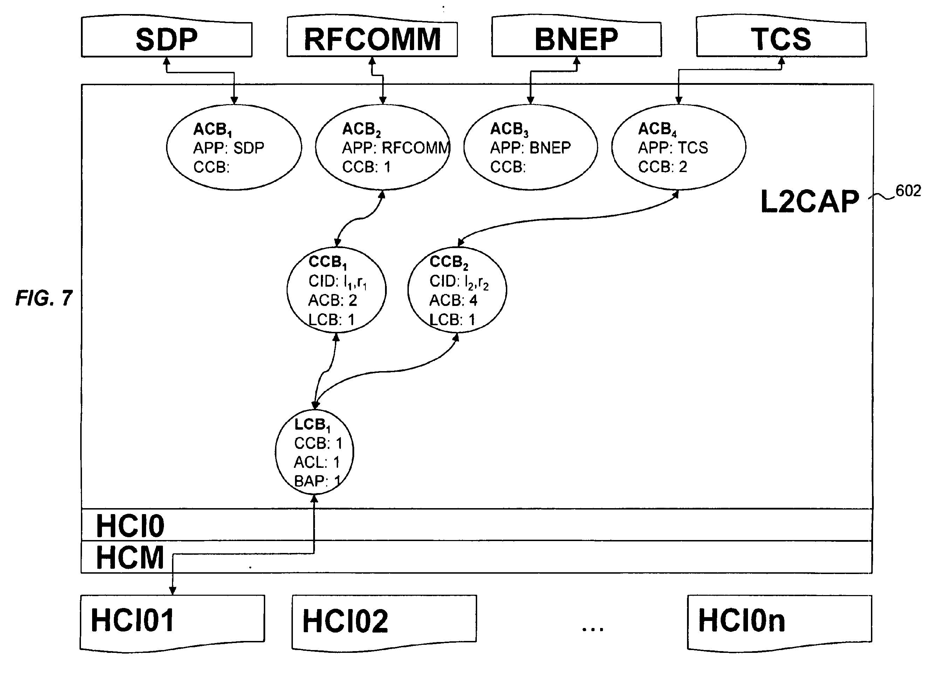

In Fig. 7, 8 und 9 ist ein solches Handover aus Sicht der L2CAP- Schicht in dem Bluetooth- Server dargestellt. Es besteht eine Verbindung zwischen einem mobilen Endgerät 101 und dem Bluetooth- Server 401 über die Basisstation 201. In Fig. 7 ist zu erkennen, dass diese physikalische Verbindung über die Host- Controller-Instanz HCl01 von BAP 201 läuft. Das mobile Endgerät 101 nutzt die Dienste RFCOMM und TCS, mit denen es über zwei logische L2CAP- Kanäle verbunden ist, nämlich CCB₁ und CCB₂.

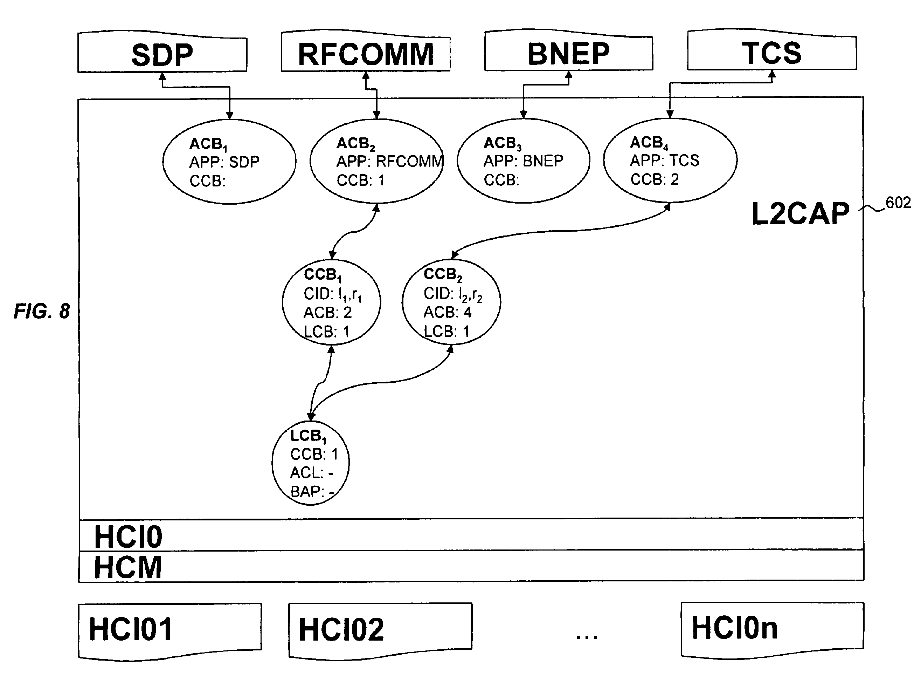

Das mobile Endgerät 101 möchte einen Wechsel von Basisstation 201 auf Basisstation 202 durchführen. Dafür wird erfindungsgemäß die physikalische Verbindung zwischen dem mobilen Endgerät 101 und der Basisstation 201 abgebaut, ohne jedoch die logischen L2CAP-Kanäle abzubauen. Fig. 8 zeigt, dass die logischen L2CAP-Kanäle nun im Verbindungskontrollblock LCB₁ vorrübergehend enden, da die physikalische Verbindung fehlt.

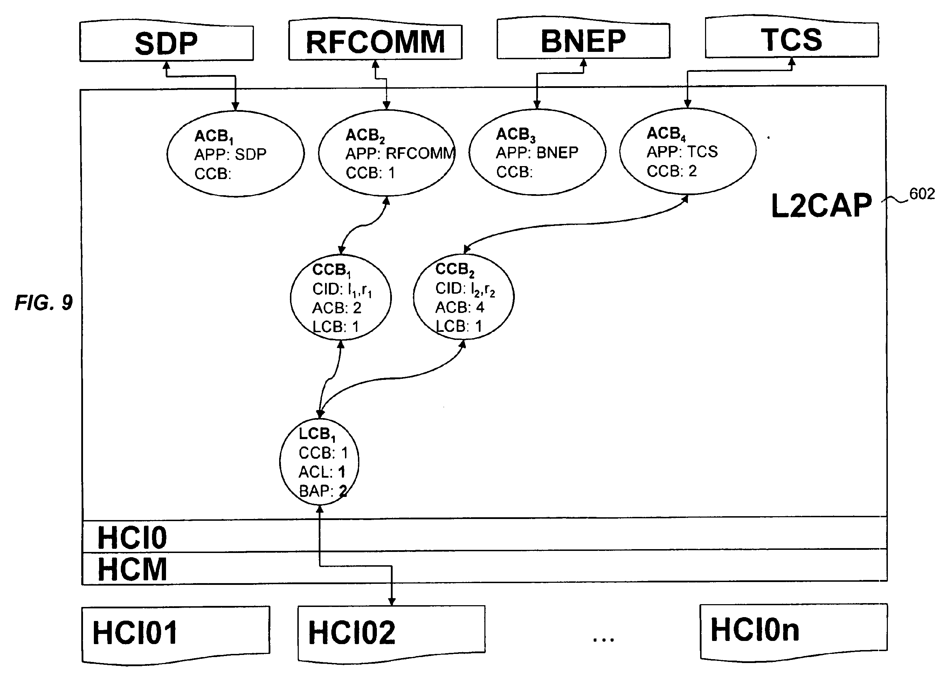

Es wird nun eine physikalische Verbindung zwischen mobilem Endgerät 101 und Basisstation 202 aufgebaut. Der Wechsel der Basisstation vollzieht sich in sehr einfacher Weise: Aus Fig. 9 ist ersichtlich, dass die Informationen der neuen physikalischen Verbindung in dem noch vorhandenen Verbindungskontrollblock LCB₁ gespeichert werden. Somit laufen die logischen Kanäle von RFCOMM und TCS nun über die Host- Controller- Instanz HCl02 und damit über Basisstation 202.

Für die auf dem LCB₁ aufsetzenden Kanalkontrollblöcke CCB₁ und CCB₂ - und somit auch für die Applikationen und Protokolle oberhalb von L2CAP - war dieser Handover transparent, d.h. diese Schichten waren in das Handover nicht eingebunden. Somit entfällt der komplette Neu-Aufbau von logischen Kanälen, die Applikations-Sitzungen (Sessions) können ungestört weiterlaufen.

Die Erfindung ist nicht auf die bisher beschriebenen Ausführungsformen beschränkt. Weitere besonders bevorzugte Ausführungsformen der Erfindung werden im folgenden kurz erläutert.

In einer bevorzugten Ausführungsform wird als Transportmedium wird zwischen der oberen Transportschicht und der unteren Transportschicht ein Ethernet verwendet, ebenso gut kann aber auch eine ISDN- S₀- oder eine ISDN- UPₙ- - Verbindung verwendet werden.

Bei einer weiteren besonders bevorzugten Ausführungsform der Erfindung werden Sprach- und andere Daten entsprechend ihrer Beschaffenheit übertragen. So wird die Sprache auf der Luftschnittstelle über SCO- (synchronous connection oriented link) Verbindungen übertragen. Dabei kann jede Basisstation maximal drei SCO-Verbindungen aufbauen. Während beim Stand der Technik alle Sprach- und Datenkanäle zwischen Basisstation und Server über einen einzigen TCP/IP- Socket übertragen werden und dafür als Protokoll PPP verwendet wird, werden erfindungsgemäß die Sprachdaten zwischen der Basisstation und dem Server mit einem RTP- (Real Time Protocol) Header für "Voice over IP Telefonie" versehen. Die Sprachdaten werden dann über je einen UDP/IP- Socket übertragen, wobei es insgesamt drei UDP- Sockets pro Basisstation für drei SCO- Sprachkanäle gibt. Dabei werden die Daten folgendermaßen aufgeteilt: Ein TCP/IP- Socket wird für Protokollnachrichten (HCl Commands und Events) zwischen oberer und unterer Transportschicht verwendet. Ein weiterer TCP/IP- Socket wird für ACL-(Asynchronous Connectionless Link) Daten verwendet. Dadurch, dass die einzelnen Datenbereiche logisch getrennt sind, lässt sich vermeiden, dass sie sich bei Engpässen gegenseitig blockieren. Mit anderen Worten, ACL- Daten werden während Sprachverbindungen durch die SCO- Sprachdaten nicht verzögert oder blockiert. Dabei können sich die RTP- Endpunkte auf der Basisstation und auf dem Server befinden, oder die RTP- Endpunkte befinden sich auf der Basisstation und auf dem fernen Teilnehmer (Teilnehmer der Voice over IP Telefonie).

Insbesondere kann die Strecke zwischen Basisstation und Server verschlüsselt sein, wobei bevorzugt ARC4 oder SSL für die Verschlüsselung verwendet wird.

Bei einer weiteren bevorzugten Ausführungsform der Erfindung wird die Verbindung zwischen dem Host-Prozessor einer Basisstation und dem Host- Controller (Bluetooth-Modul) der Basisstation über einen "Keep-Alive"- Mechanismus überwacht. Dadurch kann Fehlverhalten der Einzelkomponenten (z.B. Absturz) sofort erkannt werden, und es können Gegenmaßnahmen sofort eingeleitet werden. Die Systemstabilität und Ausfallsicherheit wird dadurch erhöht.

Bei einer weiteren besonders bevorzugten Ausführungsform wird ein erweiterter Buffer für den Datenaustausch zwischen der oberen und unteren Transportschicht eingerichtet. Beim Stand der Technik hat jeder Bluetooth- Host- Controller einen begrenzten Buffer zum Zwischenspeichern von ACL- und SCO- Datenpaketen. Es findet eine Flusskontrolle zwischen Host- Controller und Host statt. Immer wenn ein Datenpaket erfolgreich versendet wurde, sendet der Host Controller an den Host eine Nachricht (HCl Number of Completed Packets), in der dem Host die Anzahl der verschickten Pakete mitgeteilt wird. Der Host weiß daraufhin, wie viele neue Pakete er an den Host Controller senden darf. Der Nachteil bei diesem Stand der Technik ist es, dass bei der Übertragung über das Transportmedium eine vergleichsweise lange Laufzeit verstreichen kann. Damit werden die Buffer sehr schlecht ausgenutzt, da zwischen der Nachricht (HCl Number of Completed Packets) von dem Host Controller an den Host und dem Versenden eines neuen Pakets eine relativ lange Zeitdauer liegen kann.

Erfindungsgemäß wird ein zusätzlicher Buffer in der Basisstation eingerichtet, der wesentlich größer als der Buffer des Bluetooth- Host- Controllers (Bluetooth Modul) ist. Es finden nun zwei verschiedene Flusskontrollen statt: a) zwischen Host Controller und Buffer (sehr schnelle Flusskontrolle, geringe Laufzeit), b) zwischen Buffer und Host ("langsame" Flusskontrolle, lange Laufzeit). Damit lässt sich der Buffer effizienter nutzen, und die vorhandene Bandbreite auf der Luftschnittstelle kann voll ausgenutzt werden.

Bei einer weiteren, nicht dargestellten bevorzugten Ausführungsform der Erfindung ist der physikalischen Adresse jeder der mehreren Basisstationen 201, 202, ..., 20n eine oder mehrere der folgenden Angaben zugewiesen: ein Systemname, eine Hersteller- Produktbezeichnung, eine eindeutige Basisstationskennung. Der Bluetooth- Server teilt bei dieser Ausführungsform jeder Basisstationen ihren Bluetooth- Namen (Bluetooth Device Name) mit. Dieser setzt sich in seiner vollständigen Version folgendermaßen zusammen: <System-Name>, <Hersteller>-<Produktbezeichnung> und <eindeutige Basisstationskennung>. Damit hat die Basisstation des Servers zum Beispiel die Adresse: "Testsystem, Tenovis - AP, Raum103". Der System- Name ist bei allen Basisstationen des Bluetooth- Systems gleich, die eindeutige Basisstationskennung unterscheidet sich jedoch. Mobile Endgeräte können dann gezielt nach dem System- Namen suchen und so erkennen, welche Basisstationen zu ihrem eigenen Bluetooth- System gehören. Somit können problemlos mehrere Bluetooth- Kommunikationssysteme am gleichen Ort mit überlappenden Funkfeldern betrieben werden ohne sich gegenseitig zu stören. Mit anderen Worten, der physikalischen Adresse jeder der mehreren Basisstationen 201, 202, ..., 20n entspricht eine oder mehrere der folgenden Angaben: ein Systemname, eine Hersteller- Produktbezeichnung, eine eindeutige Basisstationskennung. Damit ist sichergestellt, dass die Zuordnung jeder der mehreren Host-Controller-Subinstanzen HCl01, HCl02, ... zu jeweils einer unteren Transportschicht HCl11, HCl12, ..., HCl1n auf den mehreren Basisstationen 201, 202, ..., 20n nach einer oder mehren dieser Angaben erfolgen kann.

### Bezugszeichen

- 101, 102, 103, 104: mobiles Endgerät
- 201, 202, 203, 204: Basisstation
- 300: Transportmedium
- 401,402,403: Server: Bluetooth- Server, Internet/Intranet- Server, Rechner
- 2001: oberer Protokollstapel
- 2002: unterer Protokollstapel
- 2003: Schnittstelle zwischen oberem und unterem Protokollstapel
- 4001, 4002, 4003, 4004: Protokollstapel, die jeweils den Datenaustausch zwischen einem Applikationsprogramm und einer Basisstation ermöglichen
- 4010: oberer Stapelabschnitt des oberen Protokollstapels
- 4020: unterer Stapelabschnitt des oberen Protokollstapels
- 501: Multiradio- Basisstation
- 5011: erstes Funkverbindungselement der Multiradio-Basisstation
- 5012: zweites Funkverbindungselement der Multiradio-Basisstation

## Patentansprüche

1. Verfahren zum Austausch von Daten in einem drahtlosen Kommunikationssystem zwischen mehreren Applikationsprogrammen auf einem Bluetooth- Server (401) und mehreren mobilen Endgeräten (101, 102, ...) über mehrere Basisstationen (201, 202, ..., 20n), die jeweils mit dem Bluetooth- Server (401) verbunden sind,
wobei das Bluetooth-Protokoll des drahtlosen Kommunikationssystems eine Transportschicht mit einer oberen Transportschicht (HCI0) in dem Bluetooth- Server (401) und jeweils einer unteren Transportschicht (HCI11, HCI12, ..., HCI1n) in jeder der mehreren Basisstationen (201, 202, ..., 20n) zum Verwalten der Verbindung zwischen einem der mehreren Applikationsprogramme und einer der mehreren Basisstationen (201, 202, ..., 20n) aufweist,
wobei jedes der mehreren Applikationsprogramme auf eine gemeinsame obere Transportschicht (HCI0) zugreift und
eine Host-Controller-Management-Einheit (HCM) unter der oberen Transportschicht (HCI0) in dem Bluetooth- Server (401) angeordnet ist, die mehrere Host-Controller-Subinstanzen (HCI01, HCI02, ...) aufweist, die jeweils einer unteren Transportschicht (HCI11, HCI12, ..., HCI1 n) auf den mehreren Basisstationen (201, 202, ..., 20n) zugeordnet ist, so dass jedes der mehreren Applikationsprogramme mit mehreren Basisstationen (201, 202, ..., 20n) verbunden sein kann,
**dadurch gekennzeichnet, dass**
jede der mehreren Basisstationen (201, 202, ..., 20n) eine physikalische Adresse aufweist und jedem der mehreren mobilen Endgeräte (101, 102, ...) von jedem der mehreren Applikationsprogramme eine logische Adresse zugeordnet ist,
wobei die physikalische Adresse jeder der mehreren Basisstationen (201, 202, ..., 20n) mit der logischen Adresse jedes der mehreren mobilen Endgeräte (101, 102, ...) in einer Logikverbindungsschicht (L2CAP) verknüpft wird, die über der oberen Transportschicht (HCI0) in dem Bluetooth- Server (401) angeordnet ist.

2. Verfahren nach Anspruch 1,
**dadurch gekennzeichnet, dass**
der physikalischen Adresse jeder der mehreren Basisstationen (201, 202, ..., 20n) eine oder mehrere der folgenden Angaben entspricht: ein Systemname, eine Hersteller-Produktbezeichnung, eine eindeutige Basisstationskennung, so dass die Zuordnung jeder der mehreren Host-Controller-Subinstanzen (HCI01, HCI02, ...) zu jeweils einer unteren Transportschicht (HCI11, HCI12, ..., HCI1n) auf den mehreren Basisstationen (201, 202, ..., 20n) nach einer oder mehren dieser Angaben erfolgt.

3. Verfahren nach Anspruch 1 oder 2,
**dadurch gekennzeichnet, dass**
die logische Adresse eines der mehreren mobilen Endgerät (101, 102, ...) beibehalten wird, wenn eine physikalische Verbindung zwischen einer der mehreren Basisstationen (201, 202, ..., 20n) und dem einen der mehreren Endgeräte (101, 102, ...) abgebaut wird und eine physikalische Verbindung zwischen einer anderen der mehreren Basisstationen (201, 202, ..., 20n) und dem einen der mehreren Endgeräte (101, 102, ...) aufgebaut wird.

4. Verfahren nach einem der vorangehenden Ansprüche,
**dadurch gekennzeichnet, dass**
der Austausch von Daten zwischen der oberen Transportschicht (HCI0) und der unteren Transportschicht (HCI1) über ein lokales Datennetz, insbesondere eine Ethernet-, eine ISDN- SO- oder ISDN- UPn- Verbindung, erfolgt.

5. Verfahren nach Anspruch 4,
**dadurch gekennzeichnet, dass**
der Austausch von Daten zwischen der oberen Transportschicht (HCI0) und der unteren Transportschicht (HCI1) über ein lokales Datennetz verschlüsselt erfolgt.

6. Verfahren nach einem der vorangehenden Ansprüche,
**dadurch gekennzeichnet, dass**
der Austausch von Sprachdaten zwischen der oberen Transportschicht (HCI0) und der unteren Transportschicht (HCI1) über einen UDP/IP- Socket erfolgt und der Austausch von sonstigen Daten zwischen der oberen Transportschicht (HCI0) und der unteren Transportschicht (HCI1) über einen TCP/IP- Socket erfolgt.

7. Verfahren nach einem der vorangehenden Ansprüche,
**dadurch gekennzeichnet, dass**
zwischen der oberen Transportschicht (HCI0) und der unteren Transportschicht (HCI1) in regelmässigen Zeitabständen ein Wecksignal (keep alive) ausgetauscht wird.

## Claims

1. Method for exchanging data in a wireless communication system between a plurality of application programs on a Bluetooth server (401) and a plurality of mobile terminals (101, 102, ...) via a plurality of base stations (201, 202, ..., 20n) which are each connected to the Bluetooth server (401),
the Bluetooth protocol of the wireless communication system comprising a transport layer having an upper transport layer (HCI0) in the Bluetooth server (401) and a respective lower transport layer (HCI11, HCI12, ... , HCI1n) in each of the plurality of base stations (201, 202 ... , 20n) for managing the link between one of the plurality of application programs and one of the plurality of base stations (201, 202, ..., 20n),
each of the plurality of application programs accessing a common upper transport layer (HCI0) and
a host controller management unit (HCM) being arranged in the Bluetooth server (401) under the upper transport layer (HCI0) and comprising a plurality of host controller sub-entities (HCI01, HCI02, ...) which are each assigned to a lower transport layer (HCI11, HCI12, ... , HCI1n) on the plurality of base stations (201, 202, **...,** 20n) in such a way that each of the plurality of application programs can be connected to a plurality of base stations (201, 202, ..., 20n),
**characterised in that**
each of the plurality of base stations (201, 202, ... , 20n) has a physical address, and a logical address is assigned to each of the plurality of mobile terminals (101, 102, ...) of each of the plurality of application programs,
the physical address of each of the plurality of base stations (201, 202, ..., 20n) being linked to the logical address of each of the plurality of mobile terminals (101, 102, ...) in a logic link layer (L2CAP) which is arranged in the Bluetooth server (401) above the upper transport layer (HCI0).

2. Method according to claim 1, **characterised in that** the physical address of each of the plurality of base stations (201, 202, ... , 20n) corresponds to one or more of the following specifications: a system name, a manufacturer product descriptor and an unambiguous base station identification, and therefore each of the plurality of host controller sub-entities (HCI01, HCI02, ...) is assigned to a respective lower transport layer (HCI11, HCI12, ... , HCI1 n) on the plurality of base stations (201, 202, ..., 20n) in accordance with one or more of said specifications.

3. Method according to either claim 1 or claim 2, **characterised in that** the logical address of one of the plurality of mobile terminals (101, 102, ...) is retained if a physical link between one of the plurality of base stations (201, 202, ... , 20n) and one of the plurality of terminals (101, 102, ...) is disconnected and a physical link between another of the plurality of base stations (201, 202, ..., 20n) and one of the plurality of terminals (101, 102, ...) is set up.

4. Method according to any of the preceding claims, **characterised in that** data are exchanged between the upper transport layer (HCI0) and the lower transport layer (HCI1) via a local data network, more particularly via an Ethernet, ISDN-S0 or ISDN-UPn connection.

5. Method according to claim 4, **characterised in that** data are exchanged between the upper transport layer (HCI0) and the lower transport layer (HCI1) in an encrypted manner via a local data network.

6. Method according to any of the preceding claims, **characterised in that** voice data are exchanged between the upper transport layer (HCI0) and the lower transport layer (HCI1) via a UDP/IP socket and other data is exchanged between the upper transport layer (HCI0) and the lower transport layer (HCI1) via a TCP/IP socket.

7. Method according to any of the preceding claims, **characterised in that** a prompt signal (keep alive) is exchanged between the upper transport layer (HCI0) and the lower transport layer (HCI1) at regular intervals.

## Revendications

1. Procédé d'échange de données dans un système de communication sans fil entre plusieurs programmes d'application sur un serveur Bluetooth (401) et plusieurs terminaux mobiles (101, 102, ... ) via plusieurs stations de base (201, 202, ..., 20n) qui sont respectivement connectées au serveur Bluetooth (401),
le protocole Bluetooth du système de communication sans fil présente une couche transport avec une couche transport supérieure (HCI0) dans le serveur Bluetooth (401) et respectivement une couche transport inférieure (HCI11, HCI12, ..., HCI1n) dans chacune des plusieurs stations de base (201, 202, ..., 20n) pour la gestion de la liaison entre un des plusieurs programmes d'application et une des plusieurs stations de base (201, 202, ..., 20n),
chacun des plusieurs programmes d'application agissant sur une couche transport supérieure (HCI0) commune et
une unité de Host-Controller-Management (HCM) étant disposée sous la couche transport supérieure (HCI0) dans le serveur Bluetooth (401) qui présente plusieurs sous-entités Host-Controller (HCI01, HCI02, ...), qui sont affectées respectivement à une couche transport inférieure (HCI11, HCI12, ... , HCI1n) sur les plusieurs stations de base (201, 202, ..., 20n) de sorte que chacun des plusieurs programmes d'application peut être connecté à plusieurs stations de base (201, 202, ..., 20n),
**caractérisé en ce que**
chacune des plusieurs stations de base (201, 202, ..., 20n) présente une adresse physique et **en ce qu'**une adresse logique est affectée à chacun des plusieurs terminaux mobiles (101, 102, ...) de chacun des plusieurs programmes d'application,
l'adresse physique de chacune des plusieurs stations de base (201, 202, ... , 20n) est reliée à l'adresse logique de chacun des plusieurs terminaux mobiles (101, 102, ...) dans une couche liaison logique (L2CAP) qui est disposée sur la couche transport supérieure (HCI0) dans le serveur Bluetooth (401).

2. Procédé selon la revendication 1,
**caractérisé en ce que**
une ou plusieurs des indications suivantes correspondent à l'adresse physique de chacune des plusieurs stations de base (201, 202, ..., 20n) : un nom de système, une désignation de produit de fabricant, une identification sans ambiguïté de station de base de sorte que l'affectation de chacune des plusieurs sous-entités Host-Controller (HCI01, HCI02, ...) à respectivement une couche transport inférieure (HCI11, HCI12, ..., HCI1n) sur les plusieurs stations de base (201, 202, ..., 20n) s'effectue selon une ou plusieurs de ces indications.

3. Procédé selon la revendication 1 ou 2,
**caractérisé en ce que**
l'adresse logique d'un des plusieurs terminaux mobiles (101, 102, ...) est conservée quand une liaison physique entre une des plusieurs stations de base (201, 202, ... , 20n) et l'un des plusieurs terminaux mobiles (101, 102, ...) est supprimée et une liaison physique est établie entre une autre des plusieurs stations de base (201, 202, ..., 20n) et l'un des plusieurs terminaux mobiles (101, 102, ...).

4. Procédé selon l'une des revendications précédentes,
**caractérisé en ce que**
l'échange de données entre la couche transport supérieure (HCI0) et la couche transport inférieure (HCI1) s'effectue par le biais d'un réseau de données local, en particulier une liaison Ethernet, RNIS-S0 ou RNIS-UPn.

5. Procédé selon la revendication 4,
**caractérisé en ce que**
l'échange de données entre la couche transport supérieure (HCI0) et la couche transport inférieure (HCI1) s'effectue de façon cryptée par le biais d'un réseau de données local.

6. Procédé selon l'une des revendications précédentes,
**caractérisé en ce que**
l'échange de données vocales entre la couche transport supérieure (HCI0) et la couche transport inférieure (HCI1) s'effectue par le biais d'un socket UDP/IP, et l'échange de d'autres données entre la couche transport supérieure (HCI0) et la couche transport inférieure (HCI1) s'effectue par le biais d'un socket TCP/IP.

7. Procédé selon l'une des revendications précédentes,
**caractérisé en ce que**,
entre la couche transport supérieure (HCI0) et la couche transport inférieure (HCI1), un signal keep alive est échangé à intervalles de temps réguliers.
